# EUROPÄISCHE PATENTSCHRIFT

(11) **EP 1 496 301 B1**
(45) Veröffentlichungstag und Bekanntmachung des Hinweises auf die Patenterteilung: **26.03.2008**
(21) Anmeldenummer: 04102833.3
(22) Anmeldetag: 21.06.2004
(51) Int. Cl.: F16L 37/04, F16L 25/10

(54) **Steckverbindung**
Plug-in connector
Raccordement a fiches

(30) Priorität: 08.07.2003 DE 10330678
(43) Veröffentlichungstag der Anmeldung: 12.01.2005
(73) Patentinhaber: MANN+HUMMEL GmbH, 71638 Ludwigsburg (DE)
(72) Erfinder: Champion, Arnaud, 53000 Laval (FR); Foulboeuf, Gwenael, 53260 Entrammes (FR); Sarrazin, Jean-Michel, 44850 Le Cellier (FR); Tremblay, Guy, 53000 Laval (FR)

(56) Entgegenhaltungen:
- EP-A- 0 399 234
- FR-A- 1 474 387
- FR-A- 2 167 439
- FR-A- 2 436 929
- FR-A- 2 750 755
- US-A- 1 840 312

## Beschreibung

Die Erfindung betrifft eine Steckverbindung für den Anschluss eines Rohrendes in ein Gegenstück nach dem Oberbegriff des Patentanspruchs 1; eine derartige Steckverbindung ist aus der FR-A-2436929 bekannt.

Steck- oder Kuppelungsverbindungen der vorgenannten Art sind zum Beispiel im Kraftfahrzeugbau für Rohrleitungssysteme, insbesondere für die Abdichtung von Luftführungen, Ladeluftleitungen und dergleichen geeignet. Weiterhin lassen sich derartige Steckverbindungen auch im Bereich der Haus- und Klimatechnik einsetzen.

Es ist aus der DE 29905483 ein Kunstoffbauteil mit einem separatem Anschlussbauteil, welches aus einem anderen Material bestehen kann, bekannt. Das Anschlussbauteil ist mit einer Schnappverbindung mit dem Kunststoffbauteil verbunden, wobei zur Abdichtung der Verbindung ein Dichtungsring eingebracht ist. Der Dichtungsring dichtet die Verbindung radial ab. Die Schnappverbindung wird durch zusammenwirkende Vorsprünge und Aussparungen zwischen dem Kunststoffbauteil und dem Anschlussbauteil gebildet, wodurch ein Herausziehen des Anschlussbauteils aus dem Kunststoffbauteil verhindert wird.

Aufgabe der Erfindung ist die Schaffung einer Steckverbindung, welche Toleranz- und Formabweichungen ausgleichen und somit eine dichte Verbindung zweier Bauteile miteinander erzeugt. Diese Aufgabe wird durch die Merkmale des Patentanspruchs 1 gelöst.

### Vorteile der Erfindung

Die erfindungsgemäße Steckverbindung für luftführende Leitungen weist wenigstens ein Rohr mit einem dazu korrespondierenden Gegenstück auf, wobei das Rohr in das Gegenstück einsteckbar ist. Bevorzugt weisen hierbei Rohr und Gegenstück eine konzentrische Form auf, es sind jedoch bei dieser Art von Steckverbindungen auch andere Formen möglich, wie zum Beispiel ovale oder eckige Formen. Der Außendurchmesser des Rohres ist geringfügig kleiner als der Innendurchmesser des Gegenstückes, so dass das Rohr in das Gegenstück einsteckbar ist. Das Gegenstück gliedert sich hierbei in einen Rohraufnahmebereich und einen weiterführenden Teil auf, wobei der Rohraufnahmebereich derart gestaltet ist, dass hier eine Fixierung des Rohrendbereiches des eingeführten Rohres durchgeführt wird.

Hierbei weist der Rohraufnahmebereich eine größere Flexibilität als der weiterführende Teil auf und dadurch ist dieser in den weiterführenden Teil des Gegenstückes einstülpbar. Somit liegt die Kontur, die vorher die Außenkontur des Rohraufnahmebereiches war nun innen und sorgt so zur Fixierung des Rohrendbereiches im Gegenstück. Bevorzugt weist der weiterführende Teil eine geringe Flexibilität auf und die Flexibilität des Rohraufnahmebereiches muss so hoch sein, dass ein zerstörungsfreies Einstülpen des Rohraufnahmebereiches möglich ist. Es ist selbstverständlich auch möglich den weiterführenden Teil mit einer nahezu gleichen Flexibilität wie die des Rohraufnahmebereiches auszuführen, um so bei der Gestaltung des weiteren Leitungsweges einen größeren Spielraum zu haben. Vorteilhaft ist hierbei der einfache und kostengünstige Aufbau, sowie die Tatsache, dass hier keine weiteren Teile zur Abdichtung oder zur Verbindung der beiden Verbindungspartner notwendig sind. Durch das Umstülpen und das Einführen des Rohrendbereiches in den umgestülpten Teil des Rohraufnahmebereiches des Gegenstückes wird eine luftdichte, druckverlustlose und werkzeuglos verbindbare sowie lösbare Verbindung geschaffen, welche auch höheren axialen Kräften und Vibrationen, wie sie zum Beispiel im Kraftfahrzeug entstehen und vorkommen können, stand hält. In einer zweckmäßigen Ausbildung des Erfindungsgedankens weist das einsteckbare Rohr im äußeren Bereich der Verbindungsstelle wenigstens eine Rastnase zur Herstellung eines Formschlusses mit dem Rohraufnahmebereich des Gegenstückes auf. Bevorzugt ist diese Rastnase am Rohrende umlaufend ausgebildet, wobei das Ende des Rohres hierzu schräg nach außen angefast ist und im äußeren Bereich einen Überhang aufweist, welcher in geeigneten korrespondierenden Aufnahmepunkten des Rohraufnahmebereichs des Gegenstückes einen Rastpartner findet. Es sind jedoch auch einzelne Rastnasen über den Umfang verteilt denkbar, die mit geeigneten Aufnahmen im Rohraufnahmebereich des Gegenstückes korrespondieren.

Im Rohraufnahmebereich des Gegenstückes ist wenigstens eine im inneren Bereich des Gegenstückes umlaufende Nutkante angeordnet, wobei die Nutkante korrespondierend zur Rastnase des Rohres ausgebildet ist und zur formschlüssigen Verbindung zwischen Rohr und Gegenstück ebenso wie zur Herstellung einer Dichtwirkung der Verbindung dient. Die umlaufende Rastnase des Rohres hakt in der umlaufenden Nutkante ein, wobei durch die Flexibilität des Rohraufnahmebereiches und die Stabilität des Rohres, ein geringfügiges Aufweiten an der Position der Rastnase im Rohraufnahmebereich des Gegenstückes erfolgt. Dieses dient einerseits zum Ausgleichen von Toleranzen, die bei der Fertigung von Rohr und Gegenstück entstehen können und sorgt weiterhin für ein gleichmäßiges Umlaufen des Anliegen von Rastnase und Nutkante und dadurch zu einer guten Dichtwirkung. Bei der Anordnung von mehreren Nutkanten im Bereich des Rohraufnahmebereiches, welche in einem axialen Abstand zueinander angeordnet sind, ergibt sich ein weiterer Vorteil einer Möglichkeit der Längenvariation der Verbindung und einer zusätzlichen Stabilisierung der Steckverbindung.

Es ist vorteilhaft das Gegenstück als Blasformteil aus einem thermoplastischen Kunststoff auszuführen, da hier die Herstellung relativ einfach und kostengünstig ist, und gerade im Luftführungsbereich im Automobilbau stark auf das Gewicht der anzuwendenden Teile geachtet werden muss. Prinzipiell haben Blasformteile den Nachteil, dass nur die Außenkontur nahezu toleranzfrei dargestellt werden kann, da die Außenkontur durch das Werkzeug abgebildet wird, wobei die Innenkontur stark toleranzbehaftet ist. Dieser Nachteil wird durch das Einstülpen des Rohraufnahmebereiches erfindungsgemäß umgangen, da nach dem Einstülpen die nahezu toleranzfrei dargestellten Konturen sich im Inneren des Gegenstückes befinden und so mit sehr großer Genauigkeit mit dem korrespondierenden Rohr, welches auch als Blasformteil hergestellt sein kann, zusammen gesteckt werden kann. Es ist allerdings auch möglich einen Materialmix aus Metall und Kunststoff oder Rohre aus Metall zu verwenden.

Es ist vorteilhaft den Rohraufnahmebereich von einem Teil des weiterführenden Bereiches überdecken zu lassen und Mittel zur werkzeugfreien lösbaren Verbindung zwischen Rohr und Gegenstück in diesem überdeckenden Teil zu integrieren. Hierbei ist der Rohraufnahmebereich beispielsweise in den weiterführenden Bereich an definierter Stelle angespritzt, es ist jedoch auch denkbar, dass der Rohraufnahmebereich eingeklebt, eingeschweißt oder eingesteckt wird. Der weiterführende Bereich weist hierbei an seinem dem Rohr zugewandtem Ende beispielsweise ein Klippsystem oder ein Bajonettssystem auf, welches durch korrespondierende Mittel im Rohr aufnehmbar ist und so für eine feste Verrastung von Rohr und Gegenstück sorgt. So ist es zum Beispiel sehr einfach dieses Klippsystem über die weiter oben beschriebene umlaufende Kante zu schieben und daran fest zu Klipsen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnung anhand von schematischen Ausführungsbeispielen erläutert.

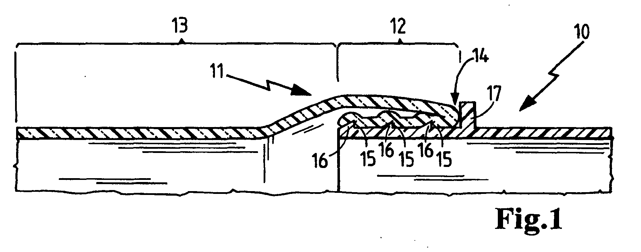

Hierbei zeigt
Figur 1 eine Steckverbindung in Schnittdarstellung.

### Beschreibung der Ausführungsbeispiele

In Figur 1 ist eine Steckverbindung für luftführende Leitungen im Schnitt dargestellt. Die Steckverbindung wird durch ein Rohr 10, welches in ein Gegenstück 11 eingeführt ist, gebildet. Hierbei gliedert sich das Gegenstück 11 in einen Rohraufnahmebereich 12 und einen weiterführenden Bereich 13 auf. In dieser Ausführung bestehen Rohr 10 und Gegenstück 11 beide aus Kunststoff, wobei der Rohraufnahmebereich 12 aus einem flexibleren Kunststoff als der weiterführende Bereich 13 besteht. Dieses ist notwendig, da der Rohraufnahmebereich 12 dadurch gebildet wird, dass das Gegenstück 11 im nicht zusammengesteckten Zustand vor dem Zusammenfügen in einem Knickbereich 14 auf der Länge des Rohraufnahmebereichs 12 in das Gegenstück eingestülpt wird. Das Einstülpen erfüllt hierbei zwei Funktionen. Einerseits weisen Blasformteile nur im äußeren Bereich eine vorgegebene Toleranz auf, und lassen sich nur im äußeren Bereich exakt darstellen, da dieser äußere Bereich durch das Werkzeug gebildet wird. Blasformteile sind an sich sehr einfach und preisgünstig herzustellen, so dass die Herstellung des Gegenstücks 11 als Blasformteil kein Problem ist. Allerdings würde es Schwierigkeiten bereiten das Rohr 10 in ein normales durch Blasformen hergestelltes Gegenstück 11 dicht zu verbinden, da der innere Bereich des Gegenstücks 11 keine definierte Kontur aufweisen kann. Durch das Umstülpen des Rohraufnahmebereichs 12 wird der exakt definierte Außenbereich des blasgeformten Gegenstücks 11 nach innen gebracht und so ist es nun einfach möglich hier exakte Geometrien darzustellen. Dieses beinhaltet andererseits eine Art gemäßigte Presspassung zwischen Rohr 10 und Gegenstück 11 im Bereich des Rohraufnahmebereichs 12 herzustellen, da die Flexibilität des Rohraufnahmebereiches 12 beim Einführen des Rohrs 10 eine gewisse Ausdehnung zulässt und damit eine bessere Dichtung gewährleistet. Im eingestülpten Rohraufnahmebereich 12 sind Nutkanten 15 zur Aufnahme einer Rastnase 16 des eingesteckten Rohres 10 vorgesehen. Durch die Anordnung mehrerer Nutkanten im Rohraufnahmebereich ist es möglich verschiedene Einrastpositionen des Rohres 10 im Rohraufnahmebereich 12 des Gegenstücks 11 zu definieren. Die Kombination aus Nutkante 15 und Rastnase 16 bewirkt eine formschlüssige dichtende Verbindung zwischen Rohr 10 und Gegenstück 11. Zur Definition einer maximalen Einführlänge des Rohres 10 in das Gegenstück 11 weist das Rohr einen Endanschlag 17 auf, welcher das Rohr radial umgibt und einen axialen Anschlag am Knickbereich 14 des Gegenstücks bewirkt. Die axialen Längeverhältnisse zwischen Rastnase 16 und Endanschlag 17 sind dabei so gewählt, dass die Rastnase 16 bei Anliegen des Endanschlags 17 am Knickbereich 14 in die letzte Nutkante des Rohraufnahmebereichs 12 einhaken kann. Durch eine Aufweitung des Gegenstücks im Rohraufnahmebereich 12 wird gewährleistet, dass im eingestülpten Zustand bei eingestecktem Querschnittsrohr keine Änderung und damit Behinderung des Gasflusses auftritt. So ist es möglich, dass weiterführender Bereich 13 und Rohr 10 den gleichen Durchmesser aufweisen.

## Patentansprüche

1. Steckverbindung mit einem Rohr (10) und mit einem Gegenstück (11), wobei das Rohr (10) in das Gegenstück (11) einsteckbar ist und sich das Gegenstück (11) in einen weiterführenden Teil (13) und in einen Rohraufnahmebereich (12) aufgliedert und der Rohraufnahmebereich (12) eine größere Flexibilität als der weiterführende Teil (13) aufweist und in den weiterführenden Teil (13) des Gegenstückes (11) einstülpbar ist, **dadurch gekennzeichnet, dass** Mittel zur Fixierung des Rohrendbereiches in dem Gegenstück (11) vorgesehen sind, wobei das einsteckbare Rohr (10) im Außenbereich der Verbindungsstelle wenigstens eine Rastnase (16) aufweist, und wobei im Rohraufnahmebereich (12) des Gegenstückes (11) wenigstens eine, im inneren Bereich des Gegenstückes (11) umlaufende, Nutkante (15) angeordnet ist, wobei die umlaufende Nutkante (15) korrespondierend zur Rastnase (16) des Rohres (10) ausgebildet ist und zur formschlüssigen Verbindung zwischen dem Rohr (10) und dem Rohraufnahmebereich (12) des Gegenstückes (11) ebenso wie zur Herstellung einer Dichtwirkung der Verbindung dient.

2. Steckverbindung nach Anspruch 1, **dadurch gekennzeichnet, dass** das Gegenstück (11) ein Blasformteil ist und aus einem thermoplastischen Kunststoff besteht.

## Claims

1. Slip joint with a pipe (10) and a counterpiece (11), the pipe (10) being insertable into the counterpiece (11) and the counterpiece (11) dividing into an extending part (13) and into a pipe-accepting area (12) and the pipe-accepting area (12) featuring a greater flexibility than the extending part (13) and being sheathable into the extending part (13) of the counterpiece (11), **characterized in that** means for fixing the pipe end area in the counterpiece (11) are provided for, the insertable pipe (10) in the exterior area of the joint featuring at least one detent (16) and at least one circumferential groove edge (15) in the inner area of the counterpiece (11) being arranged in the pipe-accepting area (12) of the counterpiece (11), the circumferential groove edge (15) being designed correspondingly to the detent (16) of the pipe (10) and serving as a form-fit connection between the pipe (10) and the pipe-accepting area (12) of the counterpiece (11) as well as for the realization of a tightness of the connection.

2. Slip joint according to claim 1, **characterized in that** the counterpiece (11) is a blow-molded part and consists of thermoplastic.

## Revendications

1. Raccordement à fiches doté d'un tube (10) et d'un contrélément (11), le tube (10) pouvant être encastré dans le contrélément (11) et le contrélément (11) se divisant en une partie prolongée (13) et en une zone de logement du tube (12), et la zone de logement du tube (12) présentant une plus grande flexibilité que la partie prolongée (13) et pouvant être emboutie dans la partie prolongée (13) du contrélément (11),
**caractérisé en ce que**
des moyens de fixation de la zone terminale du tube sont prévus dans le contrélément (11), le tube encastrable (10) présentant dans la zone extérieure du point d'assemblage au moins une came d'arrêt (16), et au moins une arête de rainure (15) périphérique dans la zone intérieure du contrélément (11) est disposée dans la zone de logement du tube (12) du contrélément (11), l'arête de rainure (15) périphérique étant formée en correspondant à la came d'arrêt (16) du tube (10) et servant à l'assemblage par complémentarité de forme entre le tube (10) et la zone de logement du tube (12) du contrélément (11) ainsi qu'à la production d'un effet d'étanchéité de l'assemblage.

2. Raccordement à fiches selon la revendication 1,
**caractérisé en ce que**
le contrélément (11) est un moulage par soufflage en une matière thermoplastique.
